# EUROPEAN PATENT APPLICATION

(11) **EP 4 683 403 A1**
(43) Date of publication of application: **21.01.2026**
(21) Application number: 24806193.9
(22) Date of filing: 25.03.2024
(51) Int. Cl.: H04W 56/00

(54) **UPLINK SYNCHRONIZATION METHOD AND APPARATUS, AND ELECTRONIC DEVICE AND STORAGE MEDIUM**

(30) Priority: 12.05.2023 CN 202310538029
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: CHAI, Li, Beijing 100053 (CN)
(74) Representative: Murgitroyd & Company
(86) International application number: PCT/CN2024/083542
(87) International publication number: WO 2024/234833

(57) **Abstract**

An uplink synchronization method and apparatus, an electronic device, and a storage medium are provided. The method includes: obtaining, by a first terminal, first information and/or performing uplink and/or downlink synchronization in the case of one or more of the followings: that a duration until a first timer times out is less than or equal to a first preconfigured duration; that a first indication sent by a network side is received; wherein the first indication is used to instruct the first terminal to obtain the first information and/or perform the uplink and/or downlink synchronization; or that uplink synchronization loss is detected or imminent uplink synchronization loss is detected; wherein the first information represents information related to uplink synchronization.

## Description

### CROSS-REFERENCE TO RELATED APPLICATION

The present application is based on, and claims priority to the Chinese Patent Application No. 202310538029.4 filed on May 12, 2023, a disclosure of which is incorporated herein by reference in its entirety.

### TECHNICAL FIELD

The present application relates to the field of wireless technology, and in particular, to an uplink synchronization method and apparatus, an electronic device and a storage medium.

### BACKGROUND

In the 3^{rd} Generation Partnership Project (3GPP) Release 17 (R17), when the information used for uplink (UL) synchronization becomes invalid, the terminal leaves the connected state and enters the idle state, declaring a Radio Link Failure (RLF) and reobtaining the latest UL synchronization information. In the related art, the RLF triggers Radio Resource Control (RRC) reestablishment, which leads to an interruption in data transmission and makes it impossible to meet the service performance requirements of the business.

### SUMMARY

To solve the technical problem in the related art, an embodiment of the present application provides an uplink synchronization method and apparatus, an electronic device, and a storage medium.

The technical solution of the embodiment of the present application is implemented as follows.

In an embodiment of the present application, an uplink synchronization method is provided, which is applied to a first terminal and includes:
obtaining first information and/or performing uplink and/or downlink synchronization in the case of one or more of the followings:
that a duration until a first timer times out is less than or equal to a first preconfigured duration;
that a first indication sent by a network side is received; wherein the first indication is used to instruct the first terminal to obtain the first information and/or perform the uplink and/or downlink synchronization; or
that uplink synchronization loss is detected or imminent uplink synchronization loss is detected;
wherein the first information represents information related to uplink synchronization.

In an embodiment of the present application, an uplink synchronization method is further provided, which is applied to a network device and includes:
sending a first indication to a first terminal; wherein
the first indication is used to instruct the first terminal to obtain first information and/or perform uplink and/or downlink synchronization; the first information represents information related to uplink synchronization.

In an embodiment of the present application, an uplink synchronization method is further provided, which is applied to a second terminal and includes:
obtaining a first System Information Block (SIB) in the case that a first timer times out or does not time out; wherein
the first SIB includes first information related to uplink synchronization.

In an embodiment of the present application, an uplink synchronization apparatus is further provided, including:
a first processing unit, configured to obtain first information and/or perform uplink and/or downlink synchronization in the case of one or more of the followings:
that a duration until a first timer times out is less than or equal to a first preconfigured duration;
that a first indication sent by a network side is received; wherein the first indication is used to instruct the first terminal to obtain the first information and/or perform the uplink and/or downlink synchronization; or
   uplink synchronization loss or imminent uplink synchronization loss is detected;
   wherein the first information represents information related to uplink synchronization.

In an embodiment of the present application, an uplink synchronization apparatus is further provided, including:
a first sending unit, configured to send a first indication to a first terminal; wherein
the first indication is used to instruct the first terminal to obtain first information and/or perform uplink and/or downlink synchronization; the first information represents information related to uplink synchronization.

In an embodiment of the present application, an uplink synchronization apparatus is further provided, including:
a first obtaining unit, configured to obtain a first System Information Block (SIB) in the case that a first timer times out or does not time out; wherein
the first SIB includes first information related to uplink synchronization.

In an embodiment of the present application, a first terminal is further provided, including: a first processor and a first communication interface; wherein
the first communication interface is configured to obtain first information and/or perform uplink and/or downlink synchronization in the case of one or more of the followings:
that a duration until a first timer times out is less than or equal to a first preconfigured duration; and/or
that a first indication sent by a network side is received; wherein the first indication is used to instruct the first terminal to obtain the first information and/or perform the uplink and/or downlink synchronization; and/or
that uplink synchronization loss or imminent uplink synchronization loss is detected;
wherein the first information represents information related to uplink synchronization.

In an embodiment of the present application, a network device is further provided, including: a second processor and a second communication interface; wherein
the second communication interface is configured to send a first indication to a first terminal; wherein
the first indication is used to instruct the first terminal to obtain first information and/or perform uplink and/or downlink synchronization; the first information represents information related to uplink synchronization.

In an embodiment of the present application, a second terminal is further provided, including: a third processor and a third communication interface; wherein
a third communication interface is configured to obtain a first System Information Block (SIB) in the case that a first timer times out or does not time out; wherein
the first SIB includes first information related to uplink synchronization.

In an embodiment of the present application, a first terminal is further provided, including: a first processor and a first memory configured to store a computer program executable on the processor, wherein
the first processor is configured to execute the computer program to perform the steps of any method on the first terminal side.

In an embodiment of the present application, a network device is provided, including: a second processor and a second memory configured to store a computer program executable on the processor, wherein
the second processor is configured to execute the computer program to perform the steps of any method on the network device side.

In an embodiment of the present application, a second terminal is further provided, including: a third processor and a third memory configured to store a computer program executable on a processor; wherein
the second processor is configured to execute the computer program to perform the steps of any method on the second terminal side.

In an embodiment of the present application, a storage medium storing a computer program is further provided, wherein the computer program is used to be executed by a processor to implement the steps of any method on the first terminal side, or implements the steps of any method on the network device side, or implements the steps of any method on the second terminal side.

In the solutions of the embodiments of the present application, the first terminal obtains the first information and/or performs the uplink and/or downlink synchronization in the case of one or more of the followings: that a duration until a first timer times out is less than or equal to a first preconfigured duration; that a first indication sent by a network side is received; wherein the first indication is used to instruct the first terminal to obtain the first information and/or perform the uplink and/or downlink synchronization; or that uplink synchronization loss is detected or imminent uplink synchronization loss is detected; wherein the first information represents information related to uplink synchronization. Correspondingly, the network device sends the first indication to the first terminal; wherein the first indication is used to instruct the first terminal to obtain first information and/or perform uplink and/or downlink synchronization; the first information represents information related to uplink synchronization. Alternatively, the second terminal reobtains a first System Information Block (SIB) in the case that a first timer times out or does not time out; wherein the first SIB includes first information related to uplink synchronization. Based on the above solutions, data interruption due to uplink synchronization loss can be avoided, thereby meeting the service performance requirements of the business.

### BRIEF DESCRIPTION OF THE DRAWINGS

FIG. 1 is a schematic flowchart of an uplink synchronization method provided in an embodiment of the present application;
FIG. 2 is a schematic flowchart of another uplink synchronization method provided in an embodiment of the present application;
FIG. 3 is a schematic flowchart of yet another uplink synchronization method provided in an embodiment of the present application;
FIG. 4 is a schematic structural diagram of an uplink synchronization apparatus provided in an embodiment of the present application;
FIG. 5 is a schematic structural diagram of another uplink synchronization apparatus provided in an embodiment of the present application;
FIG. 6 is a schematic structural diagram of yet another uplink synchronization apparatus provided in an embodiment of the present application;
FIG. 7 is a schematic structural diagram of a first terminal provided in an embodiment of the present application;
FIG. 8 is a schematic structural diagram of a network device provided in an embodiment of the present application;
FIG. 9 is a schematic structural diagram of a second terminal provided in an embodiment of the present application.

### DETAILED DESCRIPTION

Currently, a Radio Access Network (RAN) provides services to a terminal through a Radio Resource Control (RRC) layer or a Media Access Control (MAC) layer. For example, these services are provided through RRC connection management, mobility management, and resource allocation. With the increasing demand for differentiated applications, the RAN is required to possess more diversified capabilities and provide a wider variety of services. In related art, when introducing new services to the RRC layer, it is necessary to consider avoiding adverse impacts on existing RRC functions, which results in a longer deployment cycle for RAN services and makes it difficult to meet the requirement for rapid service rollout.

In 3GPP Release 17, when the information used for UL synchronization becomes invalid, the terminal leaves a connected state and enters an idle state, declaring a Radio Link Failure (RLF) and reobtaining the latest UL synchronization information. In the related art, the RLF triggers an RRC reestablishment, resulting in data transmission interruption. This fails to meet the performance requirements of most services, only meeting the needs of a few services with very loose latency requirements, thus limiting the promotion of Non-Terrestrial Network (NTN) technologies.

Related art 1:
for example, a UL synchronization validity timer is configured by a network at a per-cell level:
timer start or restart time: an epoch time of the auxiliary information, that is, the epoch time of the ephemeris data of a serving satellite. A value range of the duration is {5, 10, 15, 20, 25, 30, 35, 40, 45, 50, 55, 60, 120, 180, 240}, in seconds;
in a Geostationary Earth Orbit (GEO) scenario, a larger value is added, for example, 600 seconds, where x = 4 bits;
wherein when the common Timing Advance (TA) and ephemeris information are indicated in the same System Information Block (SIB) message, the UL synchronization validity timer is configured with at least one validity period. When the ephemeris information and the related parameters of the common TA are indicated in the same SIB message and have the same epoch time, the validity period is broadcast by the SIB.

Related art 2:
a terminal needs to have a valid Global Navigation Satellite System (GNSS) position fix while being in a connected state. To avoid data transmission interruption caused by obtaining a GNSS position information during the connection process, the Release 17 requires that the terminal immediately re-obtains some GNSS position fix before entering the connected state, regardless of whether the previous GNSS position fix is valid. When the GNSS position fix becomes invalid while the terminal is in the connected state, it will exit the connected state and enter the idle state to re-obtain GNSS position fix information. At this point, the terminal starts a new timer to obtain a new GNSS fix. When the GNSS fix expires, the terminal reports the GNSS validity timer to a base station and transits to the idle state to re-obtain the GNSS fix. The terminal autonomously determines the GNSS fix validity duration X and reports it to the network. X = {10s, 20s, 30s, 40s, 50s, 60s, 5 min, 10 min, 15 min, 20 min, 25 min, 30 min, 60 min, 90 min, 120 min, infinity}.

Based on the above, an embodiment of the present application provides an uplink synchronization method and apparatus, an electronic device and a storage medium. In the solutions of the embodiments of the present application, a first terminal obtains first information and/or performs the uplink and/or downlink synchronization in the case of one or more of the followings: that a duration until a first timer times out is less than or equal to a first preconfigured duration; that a first indication sent by a network side is received; wherein the first indication is used to instruct the first terminal to obtain the first information and/or perform the uplink and/or downlink synchronization; or that uplink synchronization loss is detected or imminent uplink synchronization loss is detected; wherein the first information represents information related to uplink synchronization. Correspondingly, the network device sends the first indication to the first terminal; wherein the first indication is used to instruct the first terminal to obtain first information and/or perform uplink and/or downlink synchronization; the first information represents information related to uplink synchronization. Alternatively, the second terminal reobtains a first System Information Block (SIB) in the case that a first timer times out or does not time out; wherein the first SIB includes first information related to uplink synchronization. Based on the above solutions, data interruption due to uplink synchronization loss can be avoided, thereby meeting the service performance requirements of the business.

The present application will be further described in detail below with reference to the accompanying drawings and specific embodiments.

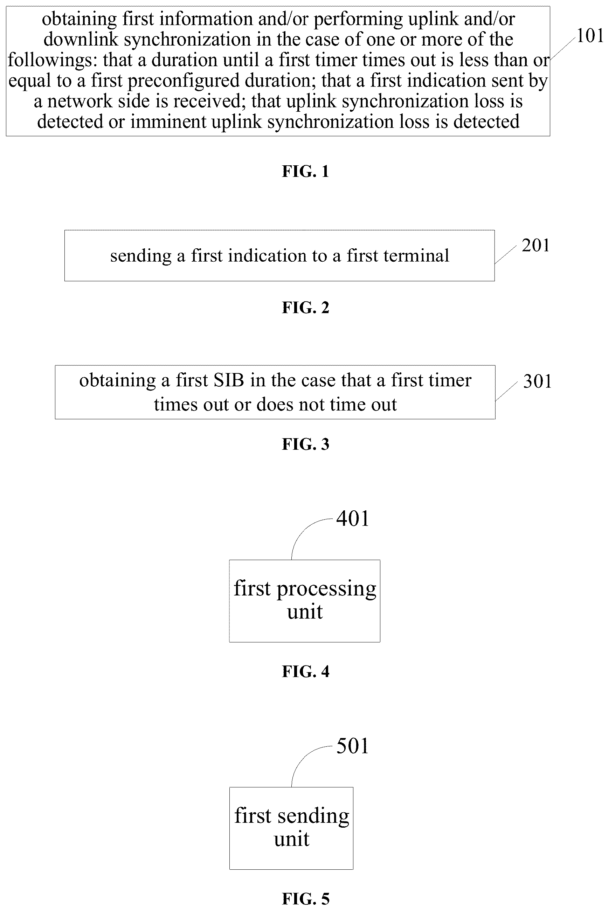

An embodiment of the present application provides an uplink synchronization method, which is applied to a first terminal. As shown in FIG. 1, the method includes:
step 101: obtaining first information and/or performing uplink and/or downlink synchronization in the case of one or more of the followings:
that a duration until a first timer times out is less than or equal to a first preconfigured duration;
that a first indication sent by a network side is received; wherein the first indication is used to instruct the first terminal to obtain the first information and/or perform the uplink and/or downlink synchronization; or
that uplink synchronization loss is detected or imminent uplink synchronization loss is detected;
wherein the first information represents information related to uplink synchronization.

Here, uplink synchronization refers to synchronization of the uplink.

Here, the first terminal is a User Equipment (UE). The first terminal stores first information. The first information represents information related to uplink synchronization, and may also be referred to as information used for uplink synchronization.

When the first timer corresponding to the first information times out, the first information expires or becomes invalid. In an embodiment of the present application, in the case that the duration until the uplink synchronization-related information expires is less than or equal to a first preconfigured duration, the first terminal reobtains the information related to uplink synchronization and/or performs uplink and/or downlink synchronization. The first preconfigured duration can be set as needed. Based on this solution, by reobtaining new first information before the current first information expires and timely updating the first information, data interruption can be avoided, thereby meeting the service performance requirements of the business.

In an embodiment of the present application, the first terminal can also obtain information related to uplink synchronization and/or perform uplink and/or downlink synchronization in the case that a first indication sent by the network side is received, uplink synchronization loss is detected or imminent uplink synchronization loss is detected. Based on this, it is possible to support a solution in which the satellite providing communication services is changed from the first satellite to the second satellite, while the cell identifier remains unchanged. This can avoid the traditional RRC signaling-triggered handover caused by the change of the cell identifier, thereby preventing the data interruption from the key change during the traditional RRC signaling-triggered handover, and meeting the service performance requirements of the business. At the same time, it can also avoid the problem of uplink and/or downlink synchronization loss, radio link failure, and the like between the first terminal and the network side due to the difference in one or more of the antenna positions, antenna angles and antenna configuration information of the two satellites after the satellite providing communication services is changed from the first satellite to the second satellite without handover information from the network side.

In an embodiment, the first information includes one or more of the followings:
ephemeris information;
Global Navigation Satellite System (GNSS) information of the first terminal;
common Timing Advance (TA);
one or more reference positions;
position information and/or orbital information of a first satellite;
position information and/or orbital information of a second satellite;
position difference information between the first satellite and the second satellite;
position information and/or altitude information of a ground base station of the first satellite;
position information and/or height information of a ground base station of the second satellite; or
candidate beams information of the first satellite and/or the second satellite; wherein
the second satellite represents a satellite that provides communication service to the first terminal; the first satellite represents a satellite that provides communication service to the first terminal prior to the second satellite.

In an embodiment of the present application, the position difference information between the first satellite and the second satellite includes one or more of a transmission time difference, a distance difference, an altitude difference, and an angle difference. The ground base stations of the first satellite and the second satellite may be a same base station or different base stations.

Based on the solution provided in an embodiments of the present application, the first terminal may use the position information and/or orbital information of the first satellite to determine the service end time of the first satellite; the first terminal may use the position information and/or orbital information of the second satellite to determine the service start time and/or service duration of the second satellite; the first terminal may use the position difference information between the first satellite and the second satellite to determine a compensation value required for uplink synchronization or downlink synchronization with the second satellite when the first satellite departs and the second satellite arrives; the first terminal may determine the time to obtain the first information based on the service end time of the first satellite and/or the service start time of the second satellite; the first terminal may, based on the optional beam information of the first satellite and/or the second satellite, measure the beam of the second satellite in advance during the handover between the first satellite and the second satellite, and may use the available beam of the second satellite during the handover process.

In an embodiment, the obtaining the first information includes one or more of the followings:
obtaining the first information through a first system message of a first satellite and/or a second satellite;
obtaining the first information through network positioning;
obtaining the first information by initiating a random access process; or
obtaining the first information by activating preconfigured resource in a non-random access process; wherein
the second satellite represents a satellite that provides communication service to the first terminal; the first satellite represents a satellite that provides communication service to the first terminal prior to the second satellite; the first system message of the first satellite and/or the second satellite carries first information related to the first satellite and/or the second satellite.

In an embodiment of the present application, the first information can be obtained from one or more nodes. For example, the GNSS information of the first terminal can be obtained from the GNSS system, and the position information of the satellite (taking the first satellite and the second satellite as an example) providing communication services to the first terminal can be obtained from the first system message of the first satellite and/or the second satellite sent by the network.

In an embodiment, the first indication is further used to indicate one or more of the followings:
to read system information;
to read information related to uplink synchronization in system information;
one or more of an antenna position, an antenna angle, and an antenna configuration of a second satellite;
position information and/or ephemeris information of a second satellite;
a sending period and/or sending position of synchronization signal block measurement timing configuration information (SMTC) of the second satellite;
to perform a handover to the same cell;
resource coordination information between a first cell of a first satellite and a second cell of a second satellite; wherein
the second satellite represents a satellite that provides communication services to the first terminal; the first satellite represents a satellite that provides communication services to the first terminal prior to the second satellite.

Here, the first indication may be sent through one or more of RRC, a MAC Control Element (MAC CE) or Downlink Control Information (DCI).

Here, when the first satellite and the second satellite are configured the same, the network may instruct the first terminal to read only system information related to uplink synchronization; when the first satellite and the second satellite are configured differently, the network may instruct the first terminal to read the system information.

Here, the indication for handover between the same cells can carry reasons for the handover, such as security information change and/or configuration update. In this way, in the case of handover between the first satellite and the second satellite, the first terminal can avoid beam failure and/or radio link failure caused by being unaware of the need to perform uplink and/or downlink synchronization with the second satellite due to the same cell identifier.

Here, the resource coordination information between the first cell of the first satellite and the second cell of the second satellite includes one or more of the followings:
resource information in one or more of time domain, frequency domain, spatial domain or code domain;
timestamp information; or
area information.

For example, in an overlapping area of the first cell and the second cell, interference avoidance can be achieved by beam direction separation and/or orthogonality, separation and/or orthogonality of Channel State Information-Reference Signal (CSI-RS) resources, and separation and/or orthogonality in Bandwidth Part (BWP) allocation. Optionally, the resource coordination information between the first cell of the first satellite and the second cell of the second satellite can carry valid time information and/or corresponding area information.

Resource coordination information between the first cell of the first satellite and the second cell of the second satellite may also be sent to the first terminal in a first system message and/or other dedicated signaling.

When the serving base stations of the first cell and the second cell are the same, the resource coordination information between the first cell of the first satellite and the second cell of the second satellite needs to be notified from the Distributed Unit (DU) to the Centralized Unit (CU) via an F1 interface. When the serving base stations of the first cell and the second cell are different, the resource coordination information between the first cell of the first satellite and the second cell of the second satellite needs to be exchanged between the base stations.

By indicating the resource coordination information between the first cell of the first satellite and the second cell of the second satellite to the first terminal, interference caused by the same cell can be avoided.

In an embodiment, the first indication includes one or more of the followings:
ephemeris information in system information and/or dedicated signaling;
service time information of a satellite in the system information and/or dedicated signaling;
indication information for satellite handover;
indication information for handover between different beams with a same Physical Cell Identifier (PCI); or
indication information that the first terminal needs to perform the uplink and/or downlink synchronization.

The service time information of the satellite is the service stop time of the first satellite and/or the service start time of the second satellite. For example, timing out of the timer for the service time of the first satellite, or the service start time of the second satellite.

In the embodiments of the present application, the first terminal may derive the time at which uplink and/or downlink synchronization is needed based on the position information and/or time information in the ephemeris information from system information and/or dedicated signaling. Alternatively, the first terminal may derive the time for uplink and/or downlink synchronization based on the service time information of the satellite from system information and/or dedicated signaling. Alternatively, the first terminal may obtain the time for uplink and/or downlink synchronization and/or perform the uplink and/or downlink synchronization operation based on the indication information carried in system information and/or dedicated signaling, which indicates when the first terminal needs to perform uplink and/or downlink synchronization.

In an embodiment, when the obtaining the first information through the first system message of the first satellite and/or the second satellite, the method further includes:
reporting second information to the network side; wherein the second information represents a position of the first terminal and carries a second indication; the second indication is used to indicate that the first information is about to become invalid;
receiving the first system message of the first satellite and/or the second satellite sent by the network side based on the second indication.

Here, the first system message of the first satellite and/or the second satellite carries the first information related to the first satellite and/or the second satellite. In an embodiment of the present application, when a duration until a first timer corresponding to the first information times out is less than or equal to a first preconfigured duration (that is, when the first timer corresponding to the first information is about to time out), the first terminal reobtains the first system message to re-obtain the first information. However, considering that the first terminal may not be able to re-obtain the latest first information before the first information expires, the first terminal reports the position information of the first terminal to the network side while reobtaining the first system message, and carry a second indication that the first information is about to become invalid, so as to obtain the latest first information from the network side. After receiving the second indication, the network side sends the latest first information to the first terminal with a higher priority, thereby maintaining the uplink synchronization state of the first terminal. This ensures the data transmission will not be interrupted before the first terminal obtains the first information from the reobtained first system message.

The first system message of the cell may carry information related to uplink synchronization of a neighboring cell. In an embodiment, the information related to uplink synchronization of the first cell may be obtained by obtaining the first system message delivered by the first cell. When the first terminal finds that the scheduling time of the information related to uplink synchronization of the current first cell is relatively late and the information related to uplink synchronization of the first cell is about to time out, it may re-obtain the information related to uplink synchronization of the first cell from the first system message delivered by the second cell. In this way, the information related to uplink synchronization of the first cell may be updated in a timely manner before the information related to uplink synchronization of the first cell times out, thereby avoiding data interruption caused by the expiration of the information used for uplink synchronization.

In an embodiment, the method further includes:
starting a second timer in the case that a Discontinuous Reception (DRX) state is entered and a start-offset in each cycle is activated;
obtaining the first information in the case that the second timer times out.

Here, the second timer is a timer for obtaining the first information.

In an embodiment of the present application, when the first terminal enters the DRX state, a timer for obtaining the first information is started simultaneously with each cycle start-offset. If this timer expires, the first terminal wakes up to obtain the first information, regardless of the current DRX state of the first terminal. In this way, the information related to uplink synchronization stored in the first terminal can be updated in a timely manner, avoiding data interruption caused by the expiration of information used for uplink synchronization.

Optionally, in an embodiment, the first priority is higher than any second priority; wherein the first priority represents the priority of obtaining the first information when the second timer times out; the second priority includes the measurement priority, the data sending priority and/or the data receiving priority.

In an embodiment of the present application, when a collision occurs between obtaining the first information and performing measurement, data sending, or data reception, obtaining the first information is given the highest priority. This ensures that the first information can be updated in a timely manner, thereby avoiding data interruption caused by the expiration of information used for uplink synchronization.

In an embodiment of the present application, it further provides an uplink synchronization method, which is applied to a network device. As shown in FIG. 2, the method includes:
step 201: sending a first indication to a first terminal; wherein
the first indication is used to instruct the first terminal to obtain first information and/or perform uplink and/or downlink synchronization; the first information represents information related to uplink synchronization.

Here, the first terminal is a UE, and the first terminal stores first information. The first information represents information related to uplink synchronization, and may also be referred to as information used for uplink synchronization.

In an embodiment of the present application, the network device sends a first indication to the first terminal to instruct the first terminal to obtain information related to uplink synchronization and/or perform uplink and/or downlink synchronization. Based on this, it is possible to support a solution in which the satellite providing communication services is changed from the first satellite to the second satellite, while the cell identifier remains unchanged. This can avoid the traditional RRC signaling-triggered handovers caused by the change of the cell identifier, thereby preventing the data interruption from the key change during the traditional RRC signaling-triggered handover, and meeting the service performance requirements of the business. At the same time, it can also avoid the problem of uplink and/or downlink synchronization loss, radio link failure, and the like between the first terminal and the network side due to the difference in one or more of the antenna positions, antenna angles and antenna configuration information of the two satellites after the satellite providing communication services is changed from the first satellite to the second satellite without handover information from the network side.

In an embodiment, the first indication is further used to indicate one or more of the followings:
to read system information;
to read information related to uplink synchronization in the system information;
information of one or more of an antenna position, an antenna angle, or an antenna configuration of a second satellite;
position information and/or ephemeris information of the second satellite;
a sending period and/or sending position of a Synchronization Signal Block Measurement Timing Configuration (SMTC) of the second satellite;
to perform a handover to a same cell; or
resource coordination information between a first cell of a first satellite and a second cell of a second satellite; wherein
the second satellite represents a satellite that provides communication service to the first terminal; the first satellite represents a satellite that provides communication service to the first terminal prior to the second satellite.

Here, the first indication may be sent through one or more of RRC, a MAC Control Element (MAC CE) or Downlink Control Information (DCI).

Here, when the first satellite and the second satellite are configured the same, the network may instruct the first terminal to read only system information related to uplink synchronization; when the first satellite and the second satellite are configured differently, the network may instruct the first terminal to read the system information.

Here, the indication for handover between the same cells can carry reasons for the handover, such as security information change and/or configuration update. In this way, in the case of handover between the first satellite and the second satellite, the first terminal can avoid beam failure and/or radio link failure caused by being unaware of the need to perform uplink and/or downlink synchronization with the second satellite due to the same cell identifier.

Here, the resource coordination information between the first cell of the first satellite and the second cell of the second satellite includes one or more of the followings:
resource information in one or more of time domain, frequency domain, spatial domain or code domain;
timestamp information; or
area information.

For example, in an overlapping area of the first cell and the second cell, interference avoidance can be achieved by beam direction separation and/or orthogonality, separation and/or orthogonality of Channel State Information-Reference Signal (CSI-RS) resources, and separation and/or orthogonality in Bandwidth Part (BWP) allocation. Optionally, the resource coordination information between the first cell of the first satellite and the second cell of the second satellite can carry valid time information and/or corresponding area information.

Resource coordination information between the first cell of the first satellite and the second cell of the second satellite may also be sent to the first terminal in a first system message and/or other dedicated signaling.

When the serving base stations of the first cell and the second cell are the same, the resource coordination information between the first cell of the first satellite and the second cell of the second satellite needs to be notified from the Distributed Unit (DU) to the Centralized Unit (CU) via an F1 interface. When the serving base stations of the first cell and the second cell are different, the resource coordination information between the first cell of the first satellite and the second cell of the second satellite needs to be exchanged between the base stations.

By indicating the resource coordination information between the first cell of the first satellite and the second cell of the second satellite to the first terminal, interference caused by the same cell can be avoided.

In an embodiment, the first indication includes one or more of the followings:
ephemeris information in system information and/or dedicated signaling;
service time information of a satellite in the system information and/or dedicated signaling;
indication information for satellite handover;
indication information for handover between different beams with a same Physical Cell Identifier (PCI); or
indication information that the first terminal needs to perform the uplink and/or downlink synchronization.

The service time information of the satellite is the service stop time of the first satellite and/or the service start time of the second satellite. For example, the timing out of the timer for the service time of the first satellite, or the service start time of the second satellite.

In the embodiments of the present application, the first terminal may derive the time at which uplink and/or downlink synchronization is needed based on the position information and/or time information in the ephemeris information from system information and/or dedicated signaling. Alternatively, the first terminal may derive the time for uplink and/or downlink synchronization based on the service time information of the satellite from system information and/or dedicated signaling. Alternatively, the first terminal may obtain the time for uplink and/or downlink synchronization and/or perform the uplink and/or downlink synchronization operation based on the indication information carried in system information and/or dedicated signaling, which indicates when the first terminal needs to perform uplink and/or downlink synchronization.

In an embodiment, the method further includes:
receiving second information reported by the first terminal, wherein the second information represents a position of the first terminal and carries a second indication; the second indication is used to indicate that the first information is about to become invalid;
delivering, to the first terminal based on the second indication, a first system message of a first satellite and/or a second satellite, wherein
the first system message carries the first information; the second satellite represents a satellite that provides communication service to the first terminal; and the first satellite represents a satellite that provided communication service to the first terminal prior to the second satellite.

In an embodiment of the present application, the first terminal reports the position information of the first terminal to the network device, and carries a second indication that the first information is about to become invalid. After receiving the second indication, the network device sends the latest first information to the first terminal with a higher priority, thereby maintaining the uplink synchronization state of the first terminal.

In an embodiment of the present application, it further provides an uplink synchronization method, which is applied to a second terminal. As shown in FIG. 3, the method includes:
step 301: obtaining a first System Information Block (SIB) in the case that a first timer times out or does not time out; wherein
the first SIB includes first information related to uplink synchronization.

Here, the second terminal refers to a UE. The second terminal stores first information, which represents information related to uplink synchronization and may also be referred to as information used for uplink synchronization. When a first timer corresponding to the first information times out, the first information expires or becomes invalid.

In an embodiment of the present application, when the first information related to uplink synchronization is about to expire or has expired, the second terminal can re-obtain the first SIB containing the first information related to uplink synchronization. Based on the solution provided in an embodiment of the present application, by reobtaining new first information before the current first information expires and timely updating the first information, data interruption can be avoided, thereby meeting the service performance requirements of the business.

In an embodiment, the first information includes one or more of the followings:
ephemeris information;
position information and/or orbital information of a satellite;
position information and/or altitude information of a ground base station of the satellite;
Global Navigation Satellite System (GNSS) information of the second terminal;
common Timing Advance (TA);
one or more reference positions.

In an embodiment of the present application, the second terminal can use the position information and/or orbital information of the satellite to determine the service end time and/or service start time and/or service duration of the satellite.

In an embodiment, the obtaining the first SIB includes:
initiating a first request to a network side; the first request is used to request to obtain the first SIB, and carries a third indication; the third indication is used to indicate that the first information is about to expire;
receiving the first SIB that is delivered by the network side based on the first request.

Here, the first SIB may or may not be included in a periodically broadcast scheduling list.

In an embodiment of the present application, when the second terminal learns from the scheduling information of the SIB1 that the broadcast time of the first SIB is after the first timer times out, the second terminal immediately initiates a first request to the network side to request the information content of the first SIB, and carries a third indication that the first information is about to expire. After receiving the first request, the network side immediately delivers the information content of the first SIB to the second terminal. This can effectively avoid uplink synchronization anomalies caused by SIB scheduling issues at the second terminal, thereby avoiding data interruption.

In an embodiment, the first SIB is delivered through a Random Access Response (RAR) and/or dedicated signaling.

Here, the network may deliver the information content of the first SIB through the RAR and/or dedicated signaling.

In an embodiment, the receiving the first SIB delivered by the network side based on the first request includes:
receiving a second system message delivered by the network side; the second system message includes a broadcast of the first SIB.

In an embodiment of the present application, the broadcast of the first SIB may be temporarily added to the second system message. The second terminal receives the information content of the first SIB by receiving the second system message delivered by the network side. This can effectively avoid uplink synchronization anomalies caused by SIB scheduling issues at the second terminal, thereby avoiding data interruption.

In an embodiment, the method further includes:
determining a time and/or a duration of the broadcast based on a System Information Block Type 1 (SIB1).

Here, the time and/or duration of the broadcast for the first SIB is indicated in SIB 1.

In an embodiment, the obtaining the first SIB further includes:
maintaining in a connected state and reading the first information from a received first SIB;
initiating a random access request based on the read first information.

In this embodiment of the present application, in the case that the first timer corresponding to the first information times out (i.e., the first information expires), the second terminal does not release the connection and enter the idle state. Instead, it maintains in the connected state, and, based on the recorded scheduling information of the SIB, rereads the first information from the received first SIB. Then, based on the reread first information, it initiates a random access request to the base station. When an RAR is received from the base station, it indicates that the random access attempt is successful. When the random access fails, the second terminal falls back to the idle state, attempts to read the first information, and performs Non-Access Stratum (NAS) recovery. In this way, data interruption can be avoided even if the information used for uplink synchronization expires.

To implement the method on the first terminal side according to the embodiment of the present application, an embodiment of the present application further provides an uplink synchronization apparatus. As shown in FIG. 4, the apparatus includes:
a first processing unit 401, configured to obtain first information and/or performing uplink and/or downlink synchronization in the case of one or more of the followings:
that a duration until a first timer times out is less than or equal to a first preconfigured duration;
that a first indication sent by a network side is received; wherein the first indication is used to instruct the first terminal to obtain the first information and/or perform the uplink and/or downlink synchronization; or
that uplink synchronization loss is detected or imminent uplink synchronization loss is detected;
wherein the first information represents information related to uplink synchronization.

In an embodiment, the first information includes one or more of the followings:
ephemeris information;
Global Navigation Satellite System (GNSS) information of the first terminal;
common Timing Advance (TA);
one or more reference positions;
position information and/or orbital information of a first satellite;
position information and/or orbital information of a second satellite;
position difference information between the first satellite and the second satellite;
position information and/or altitude information of a ground base station of the first satellite; or
position information and/or height information of a ground base station of the second satellite; wherein
the second satellite represents a satellite that provides communication service to the first terminal; the first satellite represents a satellite that provides communication service to the first terminal prior to the second satellite.

In an embodiment, the first processing unit 401 is specifically configured to perform one or more of the followings:
obtaining the first information through a first system message of a first satellite and/or a second satellite;
obtaining the first information through network positioning;
obtaining the first information by initiating a random access process; or
obtaining the first information by activating preconfigured resource in a non-random access process; wherein
the second satellite represents a satellite that provides communication service to the first terminal; the first satellite represents a satellite that provides communication service to the first terminal prior to the second satellite; the first system message of the first satellite and/or the second satellite carries first information related to the first satellite and/or the second satellite.

In an embodiment, the first indication is further used to indicate one or more of the followings:
to read system information;
to read information related to uplink synchronization in the system information;
information of one or more of an antenna position, an antenna angle, or an antenna configuration of a second satellite;
position information and/or ephemeris information of the second satellite;
a sending period and/or sending position of a Synchronization Signal Block Measurement Timing Configuration (SMTC) of the second satellite;
to perform a handover to a same cell; or
resource coordination information between a first cell of a first satellite and a second cell of a second satellite; wherein
the second satellite represents a satellite that provides communication service to the first terminal; the first satellite represents a satellite that provides communication service to the first terminal prior to the second satellite.

In an embodiment, the first indication includes one or more of the followings:
ephemeris information in system information and/or dedicated signaling;
service time information of a satellite in the system information and/or dedicated signaling;
indication information for satellite handover;
indication information for handover between different beams with a same Physical Cell Identifier (PCI); or
indication information that the first terminal needs to perform the uplink and/or downlink synchronization.

In an embodiment, the apparatus further includes:
a first reporting unit, configured to report second information to the network side when the first information is obtained through the first system message of the first satellite and/or the second satellite; wherein the second information represents a position of the first terminal and carries a second indication; the second indication is used to indicate that the first information is about to become invalid;
receive the first system message of the first satellite and/or the second satellite sent by the network side based on the second indication.

In an embodiment, the apparatus further includes:
a startup unit, configured to start a second timer in the case that a Discontinuous Reception (DRX) state is entered and a start-offset in each cycle is activated;
obtaining the first information in the case that the second timer times out.

In practical applications, the first processing unit 401, the first reporting unit, the first receiving unit and the second obtaining unit may be implemented by a communication interface in the uplink synchronization apparatus; the startup unit may be implemented by a processor in the uplink synchronization apparatus.

To implement the method on the network device side according to the embodiment of the present application, an embodiment of the present application further provides an uplink synchronization apparatus. As shown in FIG. 5, the apparatus includes:
a first sending unit 501, configured to send a first indication to a first terminal; wherein the first indication is used to instruct the first terminal to obtain first information and/or perform uplink and/or downlink synchronization; the first information represents information related to uplink synchronization.

In an embodiment, the first indication is further used to indicate one or more of the followings:
to read system information;
to read information related to uplink synchronization in the system information;
information of one or more of an antenna position, an antenna angle, or an antenna configuration of a second satellite;
position information and/or ephemeris information of the second satellite;
a sending period and/or sending position of a Synchronization Signal Block Measurement Timing Configuration (SMTC) of the second satellite;
to perform a handover to a same cell; or
resource coordination information between a first cell of a first satellite and a second cell of a second satellite; wherein
the second satellite represents a satellite that provides communication service to the first terminal; the first satellite represents a satellite that provides communication service to the first terminal prior to the second satellite.

In an embodiment, the apparatus further includes:
a second receiving unit, configured to receive second information reported by the first terminal, wherein the second information represents a position of the first terminal and carries a second indication; the second indication is used to indicate that the first information is about to become invalid;
a second sending unit, configured to deliver to the first terminal based on the second indication, a first system message of a first satellite and/or a second satellite, wherein
the first system message carries the first information; the second satellite represents a satellite that provides communication service to the first terminal; and the first satellite represents a satellite that provided communication service to the first terminal prior to the second satellite.

In practical applications, the first sending unit 501, the second sending unit and the second receiving unit may be implemented by a communication interface in an uplink synchronization apparatus.

It should be noted that the uplink synchronization apparatus provided in the above embodiment, when performing uplink synchronization, is illustrated only by the division of the above-mentioned program modules. In practical applications, the above-mentioned processing may be assigned to different program modules as needed, that is, an internal structure of the apparatus may be divided into different program modules to complete all or part of the above-described processing. In addition, the uplink synchronization apparatus provided in the above embodiment and the uplink synchronization method embodiment are based on the same concept. For specific implementation details, it may refer to the method embodiments, which will not be repeated here.

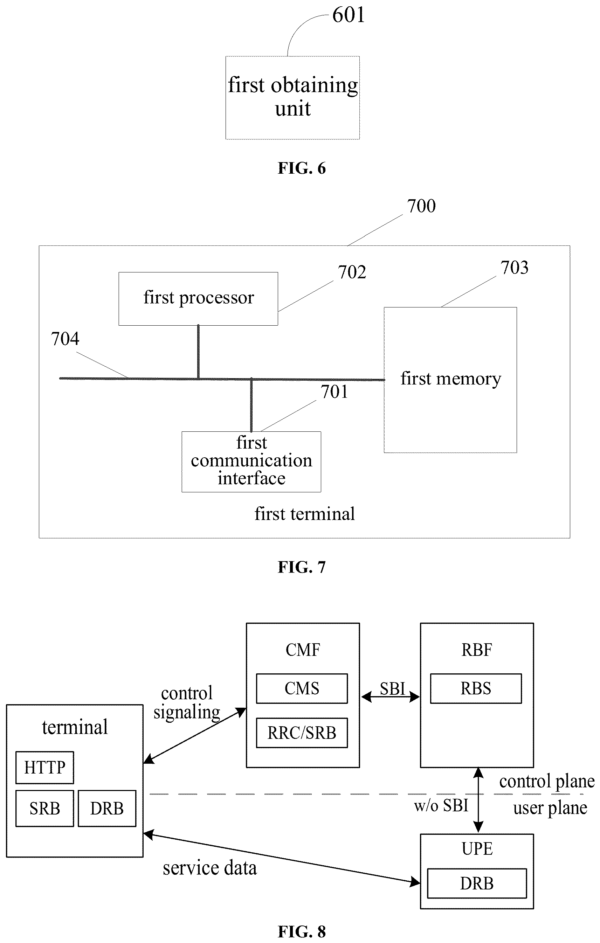

To implement the method on the second terminal side according to the embodiment of the present application, an embodiment of the present application further provides an uplink synchronization apparatus. As shown in FIG. 6, the apparatus includes:
a first obtaining unit 601, configured to obtain a first System Information Block (SIB) in the case that a first timer times out or does not time out; wherein
the first SIB includes first information related to uplink synchronization.

In an embodiment, the first information includes one or more of the followings:
ephemeris information;
position information and/or orbital information of a satellite;
position information and/or altitude information of a ground base station of the satellite;
Global Navigation Satellite System (GNSS) information of the second terminal;
common Timing Advance (TA);
one or more reference positions.

In an embodiment, the first obtaining unit 601 is specifically configured to:
initiate a first request to a network side; the first request is used to request to obtain the first SIB, and carries a third indication; the third indication is used to indicate that the first information is about to expire;
receive the first SIB that is delivered by the network side based on the first request.

In an embodiment, the first SIB is delivered through a Random Access Response (RAR) and/or dedicated signaling.

In an embodiment, when receiving the first SIB delivered by the network side based on the first request, the first obtaining unit 601 is configured to:
receive a second system message delivered by the network side; the second system message includes a broadcast of the first SIB.

In an embodiment, the apparatus further includes:
a determining unit, configured to determine a time and/or a duration of the broadcast based on a System Information Block Type 1 (SIB1).

In an embodiment, the first obtaining unit 601 is further specifically configured to:
maintain in a connected state and reading the first information from a received first SIB;
initiate a random access request based on the read first information.

In practical applications, the first obtaining unit 601 may be implemented by a communication interface in the uplink synchronization apparatus; and the determining unit may be implemented by a processor in the uplink synchronization apparatus.

It should be noted that the uplink synchronization apparatus provided in the above embodiment, when performing uplink synchronization, is illustrated only by the division of the above-mentioned program modules. In practical applications, the above-mentioned processing may be assigned to different program modules as needed, that is, an internal structure of the apparatus may be divided into different program modules to complete all or part of the above-described processing. In addition, the uplink synchronization apparatus provided in the above embodiment and the uplink synchronization method embodiment are based on the same concept. For specific implementation details, it may refer to the method embodiments, which will not be repeated here.

Based on the hardware implementation of the above program modules, and in order to implement the method on the first terminal side according to the embodiment of the present application, an embodiment of the present application further provides a first terminal. As shown in FIG. 7, a first terminal 700 includes:
a first communication interface 701, capable of exchanging information with the network side;
a first processor 702, connected to the first communication interface 701 to implement information exchange with the network side, and configured to execute one or more of the methods provided by the above-mentioned technical solutions on the first terminal side when executing a computer program. The computer program is stored in a first memory 703.

Specifically, the first communication interface 701 is configured to:
obtain first information and/or performing uplink and/or downlink synchronization in the case of one or more of the followings:
that a duration until a first timer times out is less than or equal to a first preconfigured duration;
that a first indication sent by a network side is received; wherein the first indication is used to instruct the first terminal to obtain the first information and/or perform the uplink and/or downlink synchronization; or
that uplink synchronization loss is detected or imminent uplink synchronization loss is detected;
wherein the first information represents information related to uplink synchronization.

In an embodiment, the first information includes one or more of the followings:
ephemeris information;
Global Navigation Satellite System (GNSS) information of the first terminal;
common Timing Advance (TA);
one or more reference positions;
position information and/or orbital information of a first satellite;
position information and/or orbital information of a second satellite;
position difference information between the first satellite and the second satellite;
position information and/or altitude information of a ground base station of the first satellite; or
position information and/or height information of a ground base station of the second satellite; wherein
the second satellite represents a satellite that provides communication service to the first terminal; the first satellite represents a satellite that provides communication service to the first terminal prior to the second satellite.

In an embodiment, the first communication interface 701 is specifically configured to include one or more of the followings:
obtaining the first information through a first system message of a first satellite and/or a second satellite;
obtaining the first information through network positioning;
obtaining the first information by initiating a random access process; or
obtaining the first information by activating preconfigured resource in a non-random access process; wherein
the second satellite represents a satellite that provides communication service to the first terminal; the first satellite represents a satellite that provides communication service to the first terminal prior to the second satellite; the first system message of the first satellite and/or the second satellite carries first information related to the first satellite and/or the second satellite.

In an embodiment, the first indication is further used to indicate one or more of the followings:
to read system information;
to read information related to uplink synchronization in the system information;
information of one or more of an antenna position, an antenna angle, or an antenna configuration of a second satellite;
position information and/or ephemeris information of the second satellite;
a sending period and/or sending position of a Synchronization Signal Block Measurement Timing Configuration (SMTC) of the second satellite;
to perform a handover to a same cell; or
resource coordination information between a first cell of a first satellite and a second cell of a second satellite; wherein
the second satellite represents a satellite that provides communication service to the first terminal; the first satellite represents a satellite that provides communication service to the first terminal prior to the second satellite.

In an embodiment, the first indication includes one or more of the followings:
ephemeris information in system information and/or dedicated signaling;
service time information of a satellite in the system information and/or dedicated signaling;
indication information for satellite handover;
indication information for handover between different beams with a same Physical Cell Identifier (PCI); or
indication information that the first terminal needs to perform the uplink and/or downlink synchronization.

In an embodiment, the first communication interface 701 is further configured to:
report second information to the network side when the first information is obtained through the first system message of the first satellite and/or the second satellite; wherein the second information represents a position of the first terminal and carries a second indication; the second indication is used to indicate that the first information is about to become invalid;
receive the first system message of the first satellite and/or the second satellite sent by the network side based on the second indication.

In an embodiment, a first processor 702 is configured to start a second timer in the case that a Discontinuous Reception (DRX) state is entered and a start-offset in each cycle is activated;
a first communication interface 701 is further configured to obtain the first information in the case that the second timer times out.

It should be noted that the specific processing process of the first processor 702 and the first communication interface 701 can be understood by referring to the above methods.

Obviously, in practical applications, the various components in the first terminal 700 are coupled together through a bus system 704. It should be understood that the bus system 704 is configured to enable connectivity and communication between these components. In addition to a data bus, the bus system 704 also includes a power bus, a control bus, and a status signal bus. However, for clarity, all of these buses are labeled as the bus system 704 in FIG. 7.

The first memory 703 in an embodiment of the present application is configured to store various types of data to support the operation of the first terminal 700. Examples of such data include any computer program configured to operate on the first terminal 700.

The methods disclosed in the above embodiments of the present application may be applied to or implemented by the first processor 702. The first processor 702 may be an integrated circuit chip with signal processing capabilities. During implementation, each step of the above method may be completed by integrated logic circuits in the form of hardware or software instructions in the first processor 702. The above first processor 702 may be a general-purpose processor, a Digital Signal Processor (DSP), or other programmable logic devices, a discrete gate or transistor logic device, a discrete hardware component, etc. The first processor 702 may implement or execute the various methods, steps, and logic block diagrams disclosed in the embodiments of the present application. A general-purpose processor may be a microprocessor or any conventional processor. The steps of the methods disclosed in the embodiments of the present application may be directly implemented and executed by a hardware decoding processor, or through a combination of hardware and software modules in the decoding processor. The software modules may reside in a storage medium located in the first memory 703. The first processor 702 reads information from the first memory 703 and, in combination with its hardware, completes the steps of the above method.

In an exemplary embodiment, the first terminal 700 may be implemented by one or more Application-Specific Integrated Circuits (ASICs), DSPs, Programmable Logic Devices (PLDs), Complex Programmable Logic Devices (CPLDs), Field-Programmable Gate Arrays (FPGAs), general-purpose processors, controllers, Microcontroller Unit (MCUs), microprocessors, or other electronic components to execute the aforementioned methods.

Based on the hardware implementation of the above program modules, and in order to implement the method on the network device side according to the embodiment of the present application, an embodiment of the present application further provides a network device. As shown in FIG. 8, a network device 800 includes:
a second communication interface 801, capable of exchanging information with the terminal side;
a second processor 802 is connected to the second communication interface 801 to implement information exchange with the terminal side, and configured to execute one or more of the methods provided by the above-mentioned technical solutions on the network device side when executing a computer program. The computer program is stored in a second memory 803.

Specifically, the second communication interface 801 is configured to:
send a first indication to a first terminal; wherein
the first indication is used to instruct the first terminal to obtain first information and/or perform uplink and/or downlink synchronization; the first information represents information related to uplink synchronization.

In an embodiment, the first indication is further used to indicate one or more of the followings:
to read system information;
to read information related to uplink synchronization in the system information;
information of one or more of an antenna position, an antenna angle, or an antenna configuration of a second satellite;
position information and/or ephemeris information of the second satellite;
a sending period and/or sending position of a Synchronization Signal Block Measurement Timing Configuration (SMTC) of the second satellite;
to perform a handover to a same cell; or
resource coordination information between a first cell of a first satellite and a second cell of a second satellite; wherein
the second satellite represents a satellite that provides communication service to the first terminal; the first satellite represents a satellite that provides communication service to the first terminal prior to the second satellite.

In an embodiment, the second communication interface 801 is further configured to:
receive second information reported by the first terminal, wherein the second information represents a position of the first terminal and carries a second indication; the second indication is used to indicate that the first information is about to become invalid;
deliver, to the first terminal based on the second indication, a first system message of a first satellite and/or a second satellite, wherein
the first system message carries the first information; the second satellite represents a satellite that provides communication service to the first terminal; and the first satellite represents a satellite that provided communication service to the first terminal prior to the second satellite.

It should be noted that the specific processing process of the second processor 802 and the second communication interface 801 can be understood by referring to the above method.

Obviously, in practical applications, the various components in network device 800 are coupled together through a bus system 804. It should be understood that the bus system 804 is configured to enable connectivity and communication between these components. In addition to a data bus, the bus system 804 also includes a power bus, a control bus, and a status signal bus. However, for clarity, in FIG. 8, all of these buses are labeled as bus system 804.

The second memory 803 in an embodiment of the present application is configured to store various types of data to support the operation of the network device 800. Examples of such data include any computer program configured to operate on the network device 800.

The methods disclosed in the above embodiments of the present application may be applied to or implemented by the second processor 802. The second processor 802 may be an integrated circuit chip with signal processing capabilities. During implementation, each step of the above method may be completed by integrated logic circuits in the form of hardware or software instructions in the second processor 802. The second processor 802 may be a general-purpose processor, a Digital Signal Processor (DSP), or other programmable logic devices, a discrete gate or transistor logic devices, a discrete hardware component, etc. The second processor 802 may implement or execute the various methods, steps, and logic block diagrams disclosed in the embodiments of the present application. A general-purpose processor may be a microprocessor or any conventional processor. The steps of the methods disclosed in the embodiments of the present application may be directly implemented and executed by a hardware decoding processor, or through a combination of hardware and software modules in the decoding processor. The software modules may reside in a storage medium located in the second memory 803. The second processor 802 reads the information from the second memory 803 and, in combination with its hardware, completes the steps of the above method.

In an exemplary embodiment, the network device 800 may be implemented by one or more ASICs, DSPs, PLDs, CPLDs, FPGAs, general-purpose processors, controllers, MCUs, microprocessors, or other electronic components to execute the aforementioned methods.

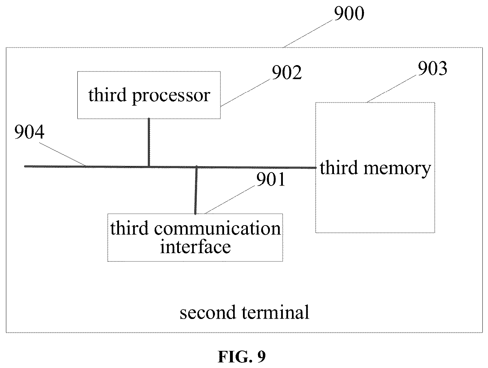

Based on the hardware implementation of the above program modules, and in order to implement the method on the second terminal side according to the embodiment of the present application, an embodiment of the present application further provides a second terminal. As shown in FIG. 9, a second terminal 900 includes:
a third communication interface 901, capable of exchanging information with the network side;
a third processor 902, connected to the third communication interface 901 to implement information exchange with the network side, and configured to execute one or more of the methods provided by the above-mentioned technical solutions on the second terminal side when executing a computer program. The computer program is stored in a third memory 903.

Specifically, the third communication interface 901 is configured to:
obtain a first System Information Block (SIB) in the case that a first timer times out or does not time out; wherein
the first SIB includes first information related to uplink synchronization.

In an embodiment, the first information includes one or more of the followings:
ephemeris information;
position information and/or orbital information of a satellite;
position information and/or altitude information of a ground base station of the satellite;
Global Navigation Satellite System (GNSS) information of the second terminal;
common Timing Advance (TA);
one or more reference positions.

In an embodiment, the third communication interface 901 is specifically configured to:
initiate a first request to a network side; the first request is used to request to obtain the first SIB, and carries a third indication; the third indication is used to indicate that the first information is about to expire;
receive the first SIB that is delivered by the network side based on the first request.

In an embodiment, the first SIB is delivered through a Random Access Response (RAR) and/or dedicated signaling.

In an embodiment, the third communication interface 901, when receiving the first SIB delivered by the network side based on the first request, is configured to:
receive a second system message delivered by the network side; the second system message includes a broadcast of the first SIB.

In an embodiment, a third processor 902 is configured to:
determine a time and/or a duration of the broadcast based on a System Information Block Type 1 (SIB1).

In an embodiment, the third communication interface 901 is further specifically configured to:
maintain in a connected state and read the first information from a received first SIB;
initiate a random access request based on the read first information.

It should be noted that the specific processing process of the third processor 902 and the third communication interface 901 can be understood by referring to the above methods.

Obviously, in practical applications, the various components in the second terminal 900 are coupled together through a bus system 904. It should be understood that the bus system 904 is configured to enable connectivity and communication between these components. In addition to a data bus, the bus system 904 also includes a power bus, a control bus, and a status signal bus. However, for clarity, all of these buses are labeled as the bus system 904 in FIG. 9.

The third memory 903 in an embodiment of the present application is configured to store various types of data to support the operation of the second terminal 900. Examples of such data include any computer program configured to operate on the second terminal 900.

The methods disclosed in the above embodiments of the present application may be applied to or implemented by the third processor 902. The third processor 902 may be an integrated circuit chip with signal processing capabilities. During implementation, each step of the above method may be completed by integrated logic circuits in the form of hardware or software instructions in the third processor 902. The third processor 902 may be a general-purpose processor, a Digital Signal Processor (DSP), or other programmable logic devices, a discrete gate or transistor logic device, a discrete hardware component, etc. The third processor 902 may implement or execute the various methods, steps, and logic block diagrams disclosed in the embodiments of the present application. A general-purpose processor may be a microprocessor or any conventional processor. The steps of the methods disclosed in the embodiments of the present application may be directly implemented and executed by a hardware decoding processor, or through a combination of hardware and software modules in the decoding processor. The software modules may reside in a storage medium located in the third memory 903. The third processor 902 reads the information from the third memory 903 and, in combination with its hardware, completes the steps of the above method.

In an exemplary embodiment, the second terminal 900 may be implemented by one or more ASICs, DSPs, PLDs, CPLDs, FPGAs, general-purpose processors, controllers, MCUs, microprocessors, or other electronic components to execute the aforementioned methods.

It should be understood that the memory (first memory 703, second memory 803, third memory 903) in the embodiments of the present application may be volatile memory or non-volatile memory, or may include both volatile and non-volatile memories. The non-volatile memory may be Read-Only Memory (ROM), Programmable Read-Only Memory (PROM), Erasable Programmable Read-Only Memory (EPROM), Electrically Erasable Programmable Read-Only Memory (EEPROM), Ferromagnetic Random Access Memory (FRAM), flash memory, magnetic surface memory, optical disk, or Compact Disc Read-Only Memory (CD-ROM). The magnetic surface memory may be disk memory or tape memory. The volatile memory may be Random Access Memory (RAM), which is used as an external high-speed cache. By way of example and not limitation, many forms of the RAM are available, such as Static Random Access Memory (SRAM), Synchronous Static Random Access Memory (SSRAM), Dynamic Random Access Memory (DRAM), Synchronous Dynamic Random Access Memory (SDRAM), Double Data Rate Synchronous Dynamic Random Access Memory (DDRSDRAM), Enhanced Synchronous Dynamic Random Access Memory (ESDRAM), Synchronous Link Dynamic Random Access Memory (SLDRAM), and Direct Rambus Random Access Memory (DRRAM). The memories described in the embodiments of the present application are intended to include, but are not limited to, these and any other suitable types of memories.

In an exemplary embodiment, the present application further provides a storage medium, namely a computer storage medium, specifically a computer-readable storage medium. For example, it includes a first memory 503 storing a computer program, wherein the computer program may be executed by a first processor 702 of a first terminal 700 to perform the steps of the first terminal side method. For another example, it includes a second memory 803 storing a computer program, wherein the computer program may be executed by a second processor 802 of a network device 800 to perform the steps of the network device side method. For yet another example, it includes a third memory 903 storing a computer program, wherein the computer program may be executed by the third processor 902 of the second terminal 900 to perform the steps of the second terminal side method. The computer-readable storage medium may be a memory such as FRAM, ROM, PROM, EPROM, EEPROM, flash memory, magnetic surface storage, optical disk, or CD-ROM.

It should be noted that the terms "first", "second", and the like are used to distinguish similar objects, and are not necessarily used to describe a specific order or sequence.

The term "and/or" in this specification is merely used to describe an association relationship between related objects, indicating that three relationships may exist. For example, A and/or B may refer to: A exists alone, both A and B exist, or B exists alone.

In addition, the technical solutions described in the embodiments of the present application may be freely combined in any manner, provided that no conflict arises.

The above description is merely about preferred embodiments of the present application and is not intended to limit the protection scope of the present application. Any modifications or substitutions that can be readily conceived by those skilled in the art within the technical scope disclosed in the present application shall fall within the protection scope of the present application. Therefore, the protection scope of the present application shall be subject to the scope defined by the claims.

## Claims

1. An uplink synchronization method, applied to a first terminal, comprising:
obtaining first information and/or performing uplink and/or downlink synchronization in the case of one or more of the followings:
that a duration until a first timer times out is less than or equal to a first preconfigured duration;
that a first indication sent by a network side is received; wherein the first indication is used to instruct the first terminal to obtain the first information and/or perform the uplink and/or downlink synchronization; or
that uplink synchronization loss is detected or imminent uplink synchronization loss is detected;
wherein the first information represents information related to uplink synchronization.

2. The method according to claim 1, wherein the first information comprises one or more of the followings:
ephemeris information;
Global Navigation Satellite System (GNSS) information of the first terminal;
common Timing Advance (TA);
one or more reference positions;
position information and/or orbital information of a first satellite;
position information and/or orbital information of a second satellite;
position difference information between the first satellite and the second satellite;
position information and/or altitude information of a ground base station of the first satellite; or
position information and/or height information of a ground base station of the second satellite; wherein
the second satellite represents a satellite that provides communication service to the first terminal; the first satellite represents a satellite that provides communication service to the first terminal prior to the second satellite.

3. The method according to claim 1 or 2, wherein the obtaining the first information comprises one or more of the followings:
obtaining the first information through a first system message of a first satellite and/or a second satellite;
obtaining the first information through network positioning;
obtaining the first information by initiating a random access process; or
obtaining the first information by activating preconfigured resource in a non-random access process; wherein
the second satellite represents a satellite that provides communication service to the first terminal; the first satellite represents a satellite that provides communication service to the first terminal prior to the second satellite; the first system message of the first satellite and/or the second satellite carries first information related to the first satellite and/or the second satellite.

4. The method according to claim 1 or 2, wherein the first indication is further used to indicate one or more of the followings:
to read system information;
to read information related to uplink synchronization in the system information;
information of one or more of an antenna position, an antenna angle, or an antenna configuration of a second satellite;
position information and/or ephemeris information of the second satellite;
a sending period and/or sending position of a Synchronization Signal Block Measurement Timing Configuration (SMTC) of the second satellite;
to perform a handover to a same cell; or
resource coordination information between a first cell of a first satellite and a second cell of a second satellite; wherein
the second satellite represents a satellite that provides communication service to the first terminal; the first satellite represents a satellite that provides communication service to the first terminal prior to the second satellite.

5. The method according to claim 1 or 2, wherein the first indication comprises one or more of the followings:
ephemeris information in system information and/or dedicated signaling;
service time information of a satellite in the system information and/or dedicated signaling;
indication information for satellite handover;
indication information for handover between different beams with a same Physical Cell Identifier (PCI); or
indication information that the first terminal needs to perform the uplink and/or downlink synchronization.

6. The method according to claim 3, wherein, when the obtaining the first information through the first system message of the first satellite and/or the second satellite, the method further comprises:
reporting second information to the network side; wherein the second information represents a position of the first terminal and carries a second indication; the second indication is used to indicate that the first information is about to become invalid;
receiving the first system message of the first satellite and/or the second satellite sent by the network side based on the second indication.

7. The method according to claim 3, wherein the method further comprises:
starting a second timer in the case that a Discontinuous Reception (DRX) state is entered and a start-offset in each cycle is activated;
obtaining the first information in the case that the second timer times out.

8. An uplink synchronization method, applied to a network device, comprising:
sending a first indication to a first terminal; wherein
the first indication is used to instruct the first terminal to obtain first information and/or perform uplink and/or downlink synchronization; the first information represents information related to uplink synchronization.

9. The method according to claim 8, wherein the first indication is further used to indicate one or more of the followings:
to read system information;
to read information related to uplink synchronization in the system information;
information of one or more of an antenna position, an antenna angle, or an antenna configuration of a second satellite;
position information and/or ephemeris information of the second satellite;
a sending period and/or sending position of a Synchronization Signal Block Measurement Timing Configuration (SMTC) of the second satellite;
to perform a handover to a same cell; or
resource coordination information between a first cell of a first satellite and a second cell of a second satellite; wherein
the second satellite represents a satellite that provides communication service to the first terminal; the first satellite represents a satellite that provides communication service to the first terminal prior to the second satellite.

10. The method according to claim 8, further comprising:
receiving second information reported by the first terminal, wherein the second information represents a position of the first terminal and carries a second indication; the second indication is used to indicate that the first information is about to become invalid;
delivering, to the first terminal based on the second indication, a first system message of a first satellite and/or a second satellite, wherein
the first system message carries the first information; the second satellite represents a satellite that provides communication service to the first terminal; and the first satellite represents a satellite that provided communication service to the first terminal prior to the second satellite.

11. An uplink synchronization method, applied to a second terminal, comprising:
obtaining a first System Information Block (SIB) in the case that a first timer times out or does not time out; wherein
the first SIB comprises first information related to uplink synchronization.

12. The method according to claim 11, wherein the first information comprises one or more of the followings:
ephemeris information;
position information and/or orbital information of a satellite;
position information and/or altitude information of a ground base station of the satellite;
Global Navigation Satellite System (GNSS) information of the second terminal;
common Timing Advance (TA);
one or more reference positions.

13. The method according to claim 11 or 12, wherein the obtaining the first SIB comprises:
initiating a first request to a network side; the first request is used to request to obtain the first SIB, and carries a third indication; the third indication is used to indicate that the first information is about to expire;
receiving the first SIB that is delivered by the network side based on the first request.

14. The method according to claim 13, wherein the first SIB is delivered through a Random Access Response (RAR) and/or dedicated signaling.

15. The method according to claim 13, wherein the receiving the first SIB delivered by the network side based on the first request comprises:
receiving a second system message delivered by the network side; the second system message comprises a broadcast of the first SIB.

16. The method according to claim 15, further comprising:
determining a time and/or a duration of the broadcast based on a System Information Block Type 1 (SIB1).

17. The method according to claim 11 or 12, wherein the obtaining the first SIB further comprises:
maintaining in a connected state and reading the first information from a received first SIB;
initiating a random access request based on the read first information.

18. An uplink synchronization apparatus, comprising:
a first processing unit, configured to obtain first information and/or perform uplink and/or downlink synchronization in the case of one or more of the followings:
that a duration until a first timer times out is less than or equal to a first preconfigured duration;
that a first indication sent by a network side is received; wherein the first indication is used to instruct the first terminal to obtain the first information and/or perform the uplink and/or downlink synchronization; or
uplink synchronization loss or imminent uplink synchronization loss is detected;
wherein the first information represents information related to uplink synchronization.

19. An uplink synchronization apparatus, comprising:
a first sending unit, configured to send a first indication to a first terminal; wherein
the first indication is used to instruct the first terminal to obtain first information and/or perform uplink and/or downlink synchronization; the first information represents information related to uplink synchronization.

20. An uplink synchronization apparatus, comprising:
a first obtaining unit, configured to obtain a first System Information Block (SIB) in the case that a first timer times out or does not time out; wherein
the first SIB comprises first information related to uplink synchronization.

21. A first terminal comprising: a first processor and a first communication interface; wherein
the first communication interface is configured to obtain first information and/or perform uplink and/or downlink synchronization in the case of one or more of the followings:
that a duration until a first timer times out is less than or equal to a first preconfigured duration; and/or
that a first indication sent by a network side is received; wherein the first indication is used to instruct the first terminal to obtain the first information and/or perform the uplink and/or downlink synchronization; and/or
that uplink synchronization loss or imminent uplink synchronization loss is detected;
wherein the first information represents information related to uplink synchronization.

22. A network device comprising: a second processor and a second communication interface; wherein
the second communication interface is configured to send a first indication to a first terminal; wherein
the first indication is used to instruct the first terminal to obtain first information and/or perform uplink and/or downlink synchronization; the first information represents information related to uplink synchronization.

23. A second terminal comprising: a third processor and a third communication interface; wherein
a third communication interface is configured to obtain a first System Information Block (SIB) in the case that a first timer times out or does not time out; wherein
the first SIB comprises first information related to uplink synchronization.

24. A first terminal comprising: a first processor and a first memory configured to store a computer program executable on the processor, wherein
the first processor is configured to execute the computer program to perform the steps of the method according to any one of claims 1 to 7.

25. A network device comprising: a second processor and a second memory configured to store a computer program executable on the processor, wherein
the second processor is configured to execute the computer program to perform the steps of the method according to any one of claims 8 to 10.

26. A second terminal comprising: a third processor and a third memory configured to store a computer program executable on a processor; wherein
the second processor is configured to execute the computer program to perform the steps of the method according to any one of claims 11 to 17.

27. A storage medium storing a computer program, wherein the computer program is used to be executed by a processor to implement the steps of the method according to any one of claims 1 to 7, or implement the steps of the method according to any one of claims 8 to 10, or implement the steps of the method according to any one of claims 11 to 17.
